# FASCICULE DE BREVET EUROPEEN

(11) **EP 1 267 262 B1**
(45) Date de publication et mention de la délivrance du brevet: **13.08.2008**
(21) Numéro de dépôt: 02291447.7
(22) Date de dépôt: 11.06.2002
(51) Int. Cl.: G06F 9/445

(54) **Procédé de configuration des paramètres d'accès distant d'un micro-ordinateur**
Verfahren zur Konfigurierung von Fernzugriffparametern eines Mikrorechners
Method for configuring remote access parameters of a microcomputer

(30) Priorité: 11.06.2001 FR 0107584
(43) Date de publication de la demande: 18.12.2002
(73) Titulaire: SAGEM Communication, 75015 Paris (FR)
(72) Inventeur: Baudoin, Georges, 75011 Paris (FR)
(74) Mandataire: David, Daniel

(56) Documents cités:
- EP-A- 0 791 881
- EP-A- 0 793 170
- WO-A-98/26548
- US-A- 5 784 563

## Description

L'invention se rapporte au domaine informatique et en particulier au moyen de raccordement d'un micro-ordinateur à un réseau informatique tel qu'internet.

Pour pouvoir se raccorder à un réseau informatique distant tel qu'Internet, à partir de son ordinateur personnel, l'utilisateur doit disposer d'un modem pour le raccordement au réseau téléphonique par exemple le réseau téléphonique commuté. Il doit ensuite pouvoir assurer les communications avec un fournisseur d'accès au réseau.

A cette fin, il doit initialement avant toute connexion effectuer deux opérations.

Il doit tout d'abord installer et activer les logiciels dits pilotes permettant à un programme de type application, d'aiguiller les données du micro-ordinateur vers le modem sélectionné. L'interface peut être de type série USB ou autre. L'application est notamment un logiciel de navigation sur internet.

Il doit ensuite configurer les paramètres de son raccordement au fournisseur d'accès à internet. Cette configuration s'effectue au moment de l'installation du logiciel, sous forme de kit de connexion fourni par le fournisseur d'accès à Internet, après s'être abonné. Le logiciel est enregistré sur un support tel qu'une disquette ou un CD-rom par exemple. Après le lancement du logiciel d'installation, l'utilisateur doit enregistrer un certain nombre d'informations qui sont nécessaires à l'établissement de la communication avec le fournisseur et pour accéder au réseau.

Les paramètres à saisir sont essentiellement les suivants : le numéro de téléphone du point d'accès au réseau, le numéro ou nom d'identification de l'utilisateur abonné, son mot de passe. On sélectionne aussi le matériel qui va être utilisé pour le raccordement au réseau, l'adressage du modem ainsi que des paramètres liés à la numérotation téléphonique ou à la configuration du point d'accès au réseau vis à vis du protocole IP. Une fois le paramétrage effectué, l'utilisateur n'a plus à saisir ces informations car il a la possibilité de les enregistrer, le mot de passe aussi.

Cependant, lorsque l'utilisateur change de modem, pour un appareil plus perfectionné par exemple, il est amené à reconfigurer ses paramètres de connexion. En effet, il doit déjà procéder à la première étape d'installation du pilote du nouveau modem. En outre, en l'état actuel des logiciels mis à disposition par les fournisseurs d'accès, et bien que les paramètres de son abonnement n'aient pas changé, il doit effectuer à nouveau la deuxième étape de l'installation de la connexion car le paramétrage comprend aussi la sélection du matériel.

Il a alors la possibilité de procéder selon deux méthodes différentes :
- Il réutilise le kit de connexion qui lui avait été fourni au moment de la souscription de l'abonnement auprès du fournisseur, et procède de nouveau à la deuxième étape mentionnée ci-dessus.
- Il modifie directement les paramètres du logiciel de connexion dans le système. Pour un PC sous Windows (marque déposée) par exemple, il y accède par la fonction « Accès réseau à distance ».

Il apparaît à l'usage que les deux méthodes ne sont pas satisfaisantes pour le plus grand nombre d'utilisateurs.

La première solution oblige à réinstaller le logiciel, qui par définition est déjà installé. Dans certains cas le logiciel dont on dispose est suffisamment performant pour n'avoir à modifier que les paramètres pertinents, à savoir ceux de l'adressage du nouveau modem à la place de l'ancien. Dans d'autres cas, il est nécessaire de désinstaller le logiciel pour l'installer à nouveau. Cette opération peut s'avérer impossible dans l'instant si l'utilisateur a perdu le kit de connexion ou bien s'il a oublié ses paramètres personnels tels que son numéro d'identification ou son mot de passe. Une démarche auprès du fournisseur est alors nécessaire.

La deuxième méthode, efficace et rapide, suppose chez l'utilisateur une bonne connaissance de la micro-informatique. L'expérience montre qu'elle est très peu employée.

Bien que le problème existe depuis de nombreuses années - il est apparu avec les fournisseurs d'accès pour le grand public - il n'a à la connaissance de la Demanderesse jamais été pris en considération. La Demanderesse s'est donc fixé comme objectif d'y remédier.

La méthode conforme à l'invention pour configurer, dans un ordinateur personnel, les paramètres d'accès distant à au moins un fournisseur de service sur un réseau distant après remplacement d'un premier modem, installé sur l'ordinateur, par un nouveau modem avec un nouveau pilote, est caractérisée par le fait qu'elle comprend les étapes suivantes :
- Installation du pilote du nouveau modem de façon à rendre ce dernier opérationnel
- Activation d'un programme comprenant un module de recherche dans la mémoire interne de l'ordinateur des paramètres d'accès distant, un module de substitution desdits paramètres d'accès distant par les paramètres correspondants à l'installation du nouveau modem.

Ainsi, grâce à l'invention, on résout tous les problèmes mentionnés plus haut dans la mesure où la procédure est automatique et l'intervention de l'utilisateur fortement réduite.

Selon un premier mode de réalisation, on substitue les nouveaux paramètres aux anciens en créant une copie des paramètres de l'ancienne connexion et en modifiant les paramètres copiés.

Selon un autre mode de réalisation, on modifie directement les paramètres de l'ancienne connexion.

L'invention est décrite plus en détail ci-après en regard des dessins sur lesquels
La figure 1 représente schématiquement un ordinateur relié au réseau Internet
La figure 2 est un exemple de représentation d'une fenêtre apparaissant sur l'écran lors de l'opération de paramétrage automatique conformément à l'invention.

Comme on peut le voir sur la figure, l'ordinateur (1) est en relation avec le serveur (3) d'un fournisseur d'accès à un réseau (5), tel que le réseau Internet. L'ordinateur comprend un processeur (11) auquel sont reliés les divers périphériques dont un lecteur de diskette et/ou de CD-rom et/ou de DVD rom (13) et un modem (15). Le modem est de tout type convenant à la communication recherchée. Il peut s'agir d'un modem analogique pour un raccordement au réseau téléphonique commuté. Il peut s'agir d'un modem numérique s'il s'agit d'une ligne RNIS. Il peut s'agir le cas échéant d'un modem ADSL ou d'un modem câble. L'ordinateur comprend les périphériques tel qu'un écran et un clavier (17). Les paramètres du logiciel d'accès au serveur (3) sont en mémoire (19). Il peut exister bien sûr d'autres logiciels de connexion pour accéder à d'autres serveurs.

Lorsque l'utilisateur, pour une raison ou une autre, change de modem (15), il est amené à installer le pilote qui lui est associé. Il introduit dans le périphérique (13) le support sur lequel le logiciel pilote est enregistré avec ses fichiers associés. Actuellement, il se présente le plus souvent sur un CD-ROM. Après installation selon la procédure habituelle, on peut établir des communications par le nouveau modem (15). Conformément à l'invention, le support (S) comprend un programme qui est activé après installation du pilote. Ce programme comprend un module qui va chercher en mémoire (19) les paramètres relatifs aux différents logiciels de communication qui sont déjà installés sur l'ordinateur et au moins un module de substitution des paramètres liés au modem par les nouveaux.

Par exemple, dans le cas du système d'exploitation Windows, les différentes étapes sont les suivantes :
- On vérifie la version du système d'exploitation installé sur le poste ;
- On appelle la fonction système de RAS (remote acces service) qui va chercher dans le registre les paramètres relatifs à chaque connexion installée ;
- On met en forme les informations obtenues dans une boîte de dialogue à l'écran avec mention de l'identification de chacune des connexions révélées par la recherche ;
- On demande à l'utilisateur de sélectionner les connexions qu'il souhaite établir avec le nouveau matériel, et de valider ; et
- On met à jour les paramètres des connexions sélectionnées. Cette mise à jour peut être obtenue soit par la création des paramètres d'une nouvelle connexion par clonage des paramètres de l'ancienne et substitution des nouveaux paramètres de modem aux anciens dans le clone, soit en substituant dans l'ancienne connexion les nouveaux paramètres de modems sans créer de clone.

Conformément à un autre mode de réalisation, on modifie directement les paramètres de l'ancienne connexion.

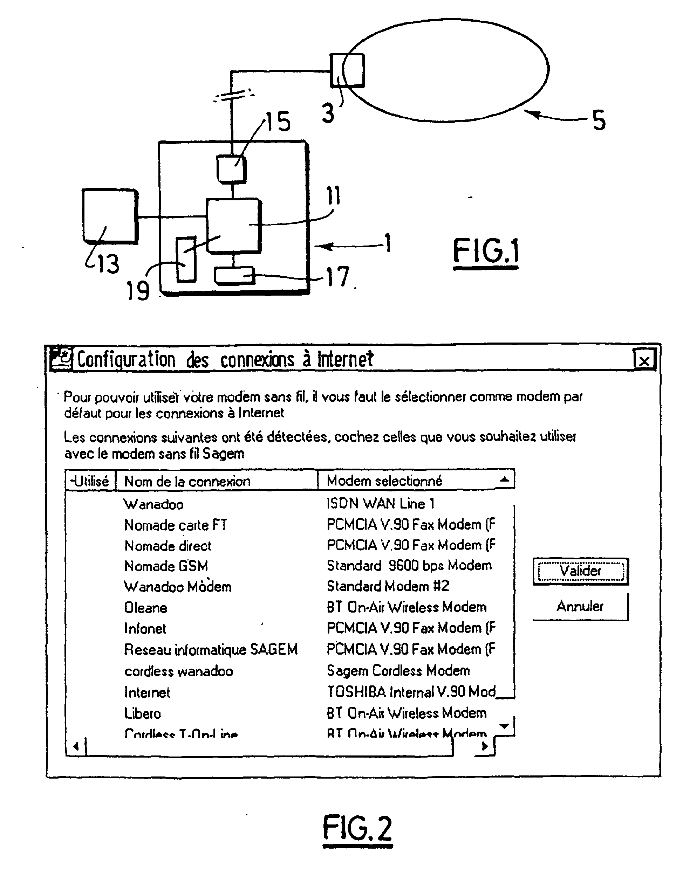

Sur la figure 2 on a représenté un exemple concret de boîte de dialogue que l'on peut faire apparaître à l'écran dans le cours de la configuration. Dans une colonne (celle de gauche sur la figure), on retrouve les noms des connexions installées dans le système. Dans le présent exemple, on voit Wanadoo, Nomade, Oleane, etc. et dans une seconde colonne (celle de droite), en regard de chaque connexion possible, on a mentionné l'adressage de chaque pilote de modem qui lui est associé.

L'utilisateur sélectionne les serveurs auxquels il souhaite se connecter par le biais du nouveau modem XX. Il valide la sélection en cliquant sur le bouton «valider». Le programme configure alors automatiquement les logiciels de connexion en remplaçant les paramètres de l'ancien modem par le nouveau. Par exemple, si l'utilisateur a sélectionné Wanadoo et Oleane, en cliquant sur le bouton valider, il active le programme qui va remplacer dans les fichiers appropriés les paramètres associés aux connexions Wanadoo et Oleane. L'utilisateur constate que l'opération a été effectuée en voyant apparaître un nouvel écran avec la mention du nouveau modem XX en regard des noms Wanadoo et Oleane. Il pourra se connecter ensuite au réseau Internet par l'un des fournisseurs d'accès Wanadoo ou Oleane, sans avoir à se préoccuper du paramétrage de leur logiciel d'accès puisque cette opération aura été effectuée de façon automatique.

Pour la représentation à l'écran, diverses variantes sont possibles. Par exemple au lieu de remplacer le nom d'un modem par le nouveau, on peut prévoir de conserver l'ancien et d'ajouter une nouvelle ligne avec les nouvelles références. Le cas échéant, on peut ne pas faire apparaître la colonne comportant les noms des différents modems.

D'autres modes opératoires équivalents sont à la portée de l'homme du métier. Ainsi pour les systèmes d'exploitation qui ne comportent pas de fonction système du type RAS de Windows, on peut prévoir un module qui fait la recherche directement dans le ou les fichiers appropriés.

## Revendications

1. Procédé de configuration des paramètres d'accès distant d'un ordinateur personnel à au moins un fournisseur d'accès sur un réseau distant après remplacement d'un premier modem, installé sur l'ordinateur, par un nouveau modem avec son pilote, **caractérisé par le fait qu'**il comprend les étapes suivantes :
a. Installation du pilote du nouveau modem de façon à rendre celui-ci opérationnel
b. Activation d'un programme comprenant un module de recherche dans la mémoire interne de l'ordinateur des paramètres d'accès distant, un module de substitution desdits paramètres d'accès distant par les paramètres correspondants à l'installation du nouveau modem.

2. Procédé selon la revendication 1, **caractérisé par le fait que** l'on substitue les nouveaux paramètres aux anciens en créant une copie des anciens et en modifiant la dite copie.

3. Procédé selon la revendication 1, **caractérisé par le fait que** l'on modifie directement les anciens paramètres.

4. Procédé selon la revendication 1, **caractérisé par le fait que** le dit programme est activé automatiquement avec l'installation du dit pilote.

5. Procédé selon l'une des revendications précédentes, **caractérisé par le fait que** le programme comprend l'appel d'une fonction système qui gère les dits paramètres.

6. Procédé selon l'une des revendications précédentes, l'ordinateur comprenant au moins deux logiciels différents d'accès à des fournisseurs de services, **caractérisé par le fait que** le dit programme comporte un module de présentation des dits logiciels dans une fenêtre sur l'écran avec demande de sélection par l'utilisateur des logiciels à configurer.

7. Procédé selon la revendication 6, **caractérisé par le fait que** le nom du nouveau modem apparaît automatiquement en regard des logiciels sélectionnés.

8. Procédé selon la revendication 6, **caractérisé par le fait qu'**une nouvelle représentation pour le logiciel avec le nouveau modem est créée, l'ancien paramétrage étant conservé dans l'ordinateur.

9. Support pour la mise en oeuvre du procédé selon l'une des revendications précédentes, **caractérisé par le fait qu'**il comprend l'enregistrement d'un logiciel pilote associé au dit modem, ainsi que celui d'un programme comportant un module de recherche automatique dans la mémoire de l'ordinateur sur lequel est installé le pilote, des paramètres du fournisseur d'accès aux réseaux informatiques distants et d'un module de substitution des dits paramètres par les paramètres du nouveau modem.

10. Support selon la revendication 9, **caractérisé par le fait que** le programme est auto-exécutable dès la fin de l'étape d'installation du pilote du modem.

## Claims

1. Method for configuring remote access parameters of a personal computer to at least one access provider on a remote network after replacement of a first modem, installed in the computer, by a new modem with its driver, **characterised in that** it comprises the following steps:
a. installation of the driver of the new modem so as to make the latter operational
b. activation of a programme comprising a search module in the internal memory of the computer for remote access parameters, a substitution module of said remote access parameters by the parameters corresponding to the installation of the new modem.

2. Method according to claim 1, **characterised in that** the new parameters are substituted for the old ones by creating a copy of the old ones and by modifying said copy.

3. Method according to claim 1, **characterised in that** the old parameters are modified directly.

4. Method according to claim 1, **characterised in that** said programme is activated automatically with the installation of said driver.

5. Method according to one of the preceding claims, **characterised in that** the programme comprises the selection of a system function which manages said parameters.

6. Method according to one of the preceding claims, the computer comprising at least two different software items for access to service providers, **characterised in that** said programme comprises a presentation module of said software items in a window on the screen with a request for selection by the user of software items to be configured.

7. Method according to claim 6, **characterised in that** the name of the new modem appears automatically opposite the selected software items.

8. Method according to claim 6, **characterised in that** a new representation for the software item with the new modem is created, the old configuration being retained in the computer.

9. Support for implementing the method according to one of the preceding claims, **characterised in that** it comprises storage of a driver software item associated with said modem and also that of a programme comprising an automatic search module in the memory of the computer in which there is installed the driver, parameters of the access provider to remote computer networks and of a module for substitution of said parameters by the parameters of the new modem.

10. Support according to claim 9, **characterised in that** the programme is auto-executable from the end of the installation step of the driver of the modem.

## Patentansprüche

1. Verfahren zur Konfiguration der Parameter zum Fernzugriff eines Personalcomputers auf wenigstens einen Anbieter eines Zugangs auf ein Fernnetz nach Ersatz eines auf dem Computer installierten ersten Modems durch ein neues Modem mit seinem Treiber, **dadurch gekennzeichnet, dass** es die folgenden Schritte aufweist:
a. Installierung des Treibers des neuen Modems derart, dass dieses funktionsfähig wird,
b. Aktivierung eines Programms, das ein Modul aufweist zur Suche nach Fernzugriffsparametern in dem internen Speicher des Computers, ein Modul zum Ersatz der genannten Fernzugriffsparameter durch die der Installation des neuen Modems entsprechenden Parameter.

2. Verfahren nach Anspruch 1, **dadurch gekennzeichnet, dass** die alten Parameter durch die neuen Parameter ersetzt werden, indem eine Kopie der alten Parameter erzeugt und die Kopie modifiziert wird.

3. Verfahren nach Anspruch 1, **dadurch gekennzeichnet, dass** die alten Parameter direkt modifiziert werden.

4. Verfahren nach Anspruch 1, **dadurch gekennzeichnet, dass** das Programm mit der Installation des genannten Treibers automatisch aktiviert wird.

5. Verfahren nach einem der vorhergehenden Ansprüche, **dadurch gekennzeichnet, dass** das Programm einen Aufruf einer Systemfunktion enthält, die die genannten Parameter verwaltet.

6. Verfahren nach einem der vorhergehenden Ansprüche, wobei der Computer wenigstens zwei verschiedene Softwareprogramme zum Zugriff auf Dienstanbieter aufweist,
**dadurch gekennzeichnet, dass** das Programm ein Modul aufweist zur Präsentation der genannten Softwareprogramme in einem Fenster auf dem Bildschirm mit einer Aufforderung zur Auswahl der zu konfigurierenden Softwareprogramme durch den Benutzer.

7. Verfahren nach Anspruch 6, **dadurch gekennzeichnet, dass** der Name des neuen Modems automatisch den ausgewählten Softwareprogrammen gegenüberstehend erscheint.

8. Verfahren nach Anspruch 6, **dadurch gekennzeichnet, dass** eine neue Darstellung für das Softwareprogramm mit dem neuen Modem erzeugt wird, wobei die alte Parametrisierung im Computer aufbewahrt wird.

9. Träger zur Durchführung des Verfahrens nach einem der vorhergehenden Ansprüche, **dadurch gekennzeichnet, dass** er die Aufzeichnung eines zu dem genannten Modem gehörenden Treibersoftwareprogramms enthält, sowie diejenige eines Programms, das ein Modul aufweist zur automatischen Suche nach Parametern des Anbieters eines Zugangs auf Computerfernnetze, und eines Moduls zum Ersetzen der genannten Parameter durch die Parameter des neuen Modems.

10. Träger nach Anspruch 9, **dadurch gekennzeichnet, dass** das Programm von dem Ende des Schritts der Installation des Modemtreibers an selbstausführend ist.
